# DEMANDE DE BREVET EUROPEEN

(11) **EP 0 851 683 A1**
(43) Date de publication de la demande: **01.07.1998**
(21) Numéro de dépôt: 97403087.6
(22) Date de dépôt: 19.12.1997
(51) Int. Cl.: H04N 7/173

(54) **Système de transmission de données avec base de données et récepteur pour un tel système**

(30) Priorité: 24.12.1996 FR 9615933
(71) Demandeur: SAGEM SA, 75116 Paris (FR)
(72) Inventeur: Gaultier, Daniel, 92330 Sceaux (FR)
(74) Mandataire: Bloch, Gérard

(57) **Abrégé**

Le système de transmission de données comporte un émetteur (1) agencé pour émettre les données d'un serveur (2) vers au moins un récepteur (11) comportant un écran (16) d'affichage de celles-ci et des moyens genre souris (15, 17, 18) de désignation de données affichées permettant d'adresser en conséquence une table (21) de sélection de références d'appel une base de données (31) et de commander en conséquence un modem (22, 23, 30) d'interrogation de la base de données (31).

## Description

Le problème à l'origine de la présente invention concerne des données diffusées, et plus précisément des données insérées dans des signaux d'image de télévision, par exemple dans des lignes réservées d'une trame d'image ou dans des paquets de données numériques, dans le cas de la télévision numérique. Dans ce cas, la transmission de données numériques s'effectue en général via un flux MPEG2 de bouquet de télévision numérique et/ou un flux de données d'un réseau câblé, par exemple Intranet ou Internet. Il peut s'agir d'informations boursières, d'actualités politiques, économiques...

Dans les signaux d'une trame d'une image de télévision, quelques lignes sont réservées entre images successives à des données de télétexte ou des signaux de test. Ces lignes, non visualisées en tant que telles et émises en temps masqué pendant le retour du faisceau cathodique vers la position de début d'image, constituent un canal de données autonome. Un récepteur spécialisé peut alors être équipé pour ne reconnaître que ces données et les afficher après la mise en forme nécessaire.

Un serveur peut ainsi commander l'émetteur pour diffuser successivement les pages d'un magazine de télétexte.

La lecture du magazine peut amener l'utilisateur à désirer un complément d'informations sur un sujet déterminé. Comme la diffusion est unidirectionnelle, toute interactivité entre l'utilisateur et le serveur est exclue pour obtenir ce complément d'informations. L'utilisateur ne peut que rechercher par lui-même un indicatif d'appel pour consulter une base de données contenant le complément d'informations, par exemple par le réseau téléphonique commuté.

Une telle exploitation n'est guère conviviale et est une source de perte de temps.

La présente invention vise à proposer une solution plus pratique.

A cet effet, l'invention concerne tout d'abord un système de transmission de données, comportant un émetteur agencé pour émettre les données d'un serveur vers au moins un récepteur comportant des moyens d'affichage de celles-ci, caractérisé par le fait que le récepteur comporte des moyens de désignation de données affichées agencés pour adresser en conséquence une table de sélection de références d'appel d'au moins une base de données et commander en conséquence des moyens d'interrogation de la base de données.

Ainsi, les correspondances entre des données affichées et la base de données concernée sont en mémoire dans la table de sélection et la simple désignation d'une donnée affichée permet de consulter la base de données, par interrogation de celle-ci.

Cette base de donnée peut être distante et atteinte à travers un réseau, public ou privé, ou encore locale, par exemple dans un PC.

Avantageusement, la base de données comporte des moyens d'émission d'informations de réponse agencés pour commander l'émetteur.

L'invention concerne en outre un récepteur pour recevoir des données d'un serveur du système selon l'invention, comportant des moyens de réception et des moyens d'affichage des données, récepteur caractérisé par le fait qu'il comporte des moyens de désignation de données affichées agencés pour adresser en conséquence une table de sélection de références d'appel d'au moins une base de données et commander en conséquence des moyens d'interrogation de la base de données.

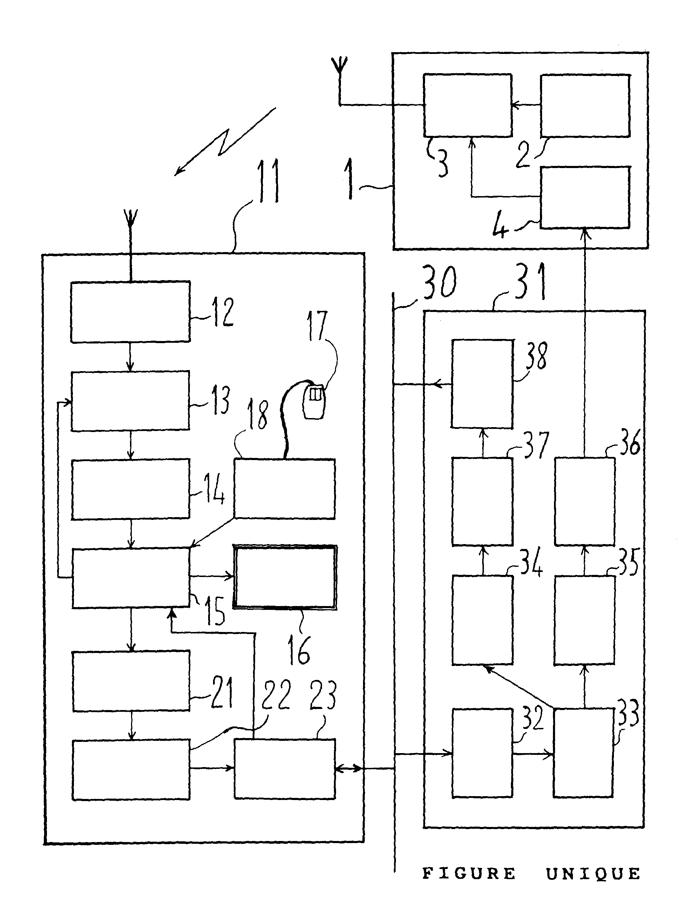

L'invention sera mieux comprise à l'aide de la description suivante d'un système de transmission de données selon l'invention, en référence à la figure unique annexée qui en est une représentation par schéma bloc.

Le système représenté comporte un ensemble émetteur-serveur 1 de diffusion, ici hertzienne, de signaux de trame d'images de télévision comportant des lignes de trame réservées à la transmission de données alphanumériques de télétexte, ici des informations boursières.

Un récepteur de télévision 11 reçoit les signaux diffusés pour exploiter les données de télétexte et en particulier appeler en fonction de celles-ci des serveurs de base de données raccordés ici au réseau de la marque protégée INTERNET, dont l'un est représenté sous la référence 31.

L'émetteur 1 comporte un serveur 2, local ou distant, insérant des données de télétexte dans la trame d'image TV émise par un émetteur hertzien 3.

Le récepteur 11 comporte un amplificateur de réception vidéo 12 alimentant un décodeur 13 d'extraction des données télétexte de la trame, synchronisé par les signaux classiques de synchronisation ligne et trame de l'image, et les rangeant dans une mémoire 14.

La mémoire 14 alimente un coupleur 15 commandant un écran 16 d'affichage des données télétexte. La position d'une souris 17, détectée par un circuit 18, est incrustée dans l'image affichée par le coupleur 15.

En fonction de la donnée désignée par la souris 17, par exemple le nom d'une société cotée en bourse, le coupleur 15 commande l'adressage d'une mémoire 21 contenant une table de correspondance sélectionnant une référence, ou numéro, d'appel d'un serveur de base de données, comme 31, correspondant à la donnée désignée. Le coupleur 15 transmet aussi au décodeur 13 la donnée sélectionnée.

La mémoire 21 commande un circuit d'appel 22, effectuant la prise de ligne et composant le numéro d'appel du serveur (31) à travers un modem 23 relié au réseau INTERNET 30. Le modem 23 est relié au coupleur 15 pour commander l'affichage des informations de réponse issues du serveur consulté 31, c'est-à-dire ici des informations financières sur la société sélectionnée à l'écran.

Le serveur base de données 31 comporte un modem 32 de réception commandant un gestionnaire 33 de tables de données 34 et 35, affectées respectivement à des réponses individuelles et à des réponses groupées.

La table 34 commande un circuit serveur 37 relié au réseau INTERNET par un modem 38, tandis que la table 35 commande un autre circuit serveur 36 relié, ici par le réseau commuté, à l'ensemble émetteur-serveur 1, plus précisément à un circuit 4 d'adressage en retour des informations demandées au serveur 31, vers le récepteur 11 et d'autres éventuellement.

Le fonctionnement du système va maintenant être expliqué plus en détails.

Le serveur 2 émet cycliquement un magazine de bourse dans le canal (ligne de trame d'image) réservé à cet effet.

Le décodeur 13 mémorise ces données et les met en page pour les afficher sur l'écran 16 par le coupleur 15 dès qu'une nouvelle page de magazine a été reçue. Par la souris 17, ou encore par les touches "flèche" d'un clavier ou par une télécommande infrarouge déplaçant un curseur, l'utilisateur peut alors pointer l'une des données affichées pour la désigner et, à travers elle, désigner une base de données de consultation comme 31, contenant des données d'informations complémentaires sur la société ainsi désignée, et formuler une demande.

Le coupleur 15 détecte alors l'activation de la souris 17 pour une position donnée dans l'image de données affichées, position correspondant aux caractères représentant le nom de la société désignée. Le coupleur 15 adresse alors la table de correspondance 21 avec ce nom de société désignée et la table 21 fournit en retour le numéro d'appel du serveur base de données comme 31 comportant les informations complémentaires associées au nom désigné. Un appel d'interrogation du serveur 31 est alors émis par les circuits 22, 23 sur le réseau 30 et reçu par le modem 32.

D'une façon générale, on conçoit que la donnée désignée est un mot-clé permettant d'appeler une ou même plusieurs bases de données comme 31.

Le gestionnaire 33 a pour fonction de sélectionner les informations pertinentes en fonction de la donnée sélectionnée, cette dernière ayant aussi été transmise au serveur 31 dans cet exemple, avec le numéro d'appel du récepteur 11, pour mieux délimiter les informations à fournir en retour, puisqu'en général un serveur comme 31 comporte des informations relatives à une pluralité de questions posées (données sélectionnées). On peut considérer en fait que la donnée sélectionnée transmise est un suffixe d'adresse à usage local dans le serveur 31.

Le gestionnaire 33 lit alors la table 34 en fonction du nom de société désignée et les informations complémentaires obtenues en réponse sont transmises au modem 23 du récepteur 11 à travers le circuit serveur 37, le modem 38 et le réseau 30.

Cependant, dans le cas où le gestionnaire 33 détecte une pluralité de demandes identiques par comparaison d'interrogations, provenant d'une pluralité de récepteurs comme 11, dans un temps limité, il effectue une réponse groupée ou globale par l'intermédiaire de l'émetteur 1. Une telle diffusion évite ainsi la transmission d'une pluralité de réponses adressées individuellement. Cette réponse globale intervient par lecture de la table 35, dont les informations complémentaires sont envoyées au circuit d'adressage 4 de l'émetteur 1, accompagnées de la question posée, c'est-à-dire du nom de la société désignée, ou sélectionnée, qui sert de clé d'adressage, ou de filtrage, en réception. Le circuit 4 insère alors, par multiplexage temporel, un flux d'informations de réponse dans le flux des données diffusées cycliquement par le serveur 2, avec un champ repéré spécifiant le nom de la société sélectionnée concernée par les informations de réponse associées. On conçoit qu'en pratique le serveur 31 ne comporte qu'une table unique (34, 35) avec un aiguillage de sortie.

Le décodeur 13, recevant les deux flux, multiplexés, de données diffusées, range systématiquement en mémoire 14 le flux de données du serveur 2. Par contre, pour le flux provenant du circuit 4 et émis avec un mot de code, ou motif, de repère, le décodeur 13 compare la donnée désignée diffusée, dans le champ qui lui est réservé, avec la donnée désignée locale fournie par le coupleur 15. Il ne valide alors que les informations pertinentes, c'est-à-dire les réponses diffusées concernant la demande du récepteur 11. Le décodeur 13 peut, en variante, effectuer une détermination de la corrélation entre la donnée désignée locale et l'information de réponse. Ces informations de réponse sont alors affichées sur l'écran 16.

Par la souris 17, ou une télécommande infrarouge commandant le déplacement de deux curseurs, horizontal et vertical, sur l'écran 16, on peut ainsi appeler automatiquement à l'écran 16 des informations contenues dans des bases de données locales ou distantes et reliées au récepteur 11 par une liaison, un réseau commuté ou un réseau à diffusion, tel que hertzien ou à fibre optique. Les liaisons émetteur (1)-récepteur (11) et émetteur (1)-serveur de base de données (31) peuvent de même être de tout type indiqué comme ci-dessus. En particulier, la base de données peut être un serveur de la marque protégée MINITEL ou analogue, échangeant avec le modem 23 des données alphanumériques sur le réseau téléphonique commuté RTC, à travers éventuellement un réseau de transmission par paquets. En particulier, l'émetteur de télévision peut être un émetteur de signaux de télévision numérique agencé pour insérer les données dans un flux de signaux numériques d'image, par exemple à la norme MPEG2, et le récepteur est agencé pour la réception de tels signaux de télévision numérique. Comme réseau de transmission numérique pour la transmission des données on peut songer, en plus des réseaux hertziens numériques, aux réseaux Intranet ou Internet, et, d'une façon générale, aux réseaux câblés.

Le multiplexage temporel (ou encore fréquentiel) ainsi réalisé dans la séquence des signaux diffusés permet de transformer un réseau physique de transmission de signaux en une pluralité de réseaux logiques, c'est-à-dire ayant des applications indépendantes (ici TV et données). Les récepteurs peuvent être simplifiés pour n'exploiter que les signaux, données ou autres, relatifs à un seul des réseaux logiques.

## Revendications

1. Système de transmission de données, comportant un émetteur (1) agencé pour émettre les données d'un serveur (2) vers au moins un récepteur (11) comportant des moyens (16) d'affichage de celles-ci, caractérisé par le fait que le récepteur (11) comporte des moyens (15, 17, 18) de désignation de données affichées agencés pour adresser en conséquence une table (21) de sélection de références d'appel d'au moins une base de données (31) et commander en conséquence des moyens (22, 23, 30) d'interrogation de la base de données (31).

2. Système selon la revendication 1, dans lequel la base de données (31) comporte des moyens (36) d'émission d'informations de réponse agencés pour commander l'émetteur (1).

3. Système selon l'une des revendications 1 et 2, dans lequel l'émetteur (1) est un émetteur de trames de signaux de télévision, agencé pour insérer les données dans une ligne d'image réservée de la trame.

4. Système selon l'une des revendications 1 et 2, dans lequel l'émetteur est un émetteur de signaux de télévision numérique, agencé pour insérer les données dans un flux de signaux numériques d'image.

5. Système selon l'une des revendications 1 à 4, dans lequel les moyens d'interrogation comportent un modem (23) de connexion au réseau RTC.

6. Système selon l'une des revendications 2 à 5, dans lequel il est prévu une pluralité de récepteurs (11) et la base de données (31) est agencée pour être interrogée par les récepteurs (11) et leur répondre par l'intermédiaire de l'émetteur (1).

7. Système selon la revendication 6, dans lequel la base de données (31) est agencée pour comparer les interrogations des récepteurs (11).

8. Récepteur pour recevoir des données d'un serveur (1) du système de la revendication 1, comportant des moyens de réception (12, 13) et des moyens (15, 16) d'affichage des données, récepteur caractérisé par le fait qu'il comporte des moyens (15, 17, 18) de désignation de données affichées agencés pour adresser en conséquence une table (21) de sélection de références d'appel d'au moins une base de données (31) et commander en conséquence des moyens (22, 23, 30) d'interrogation de la base de données (31).

9. Récepteur selon la revendication 8, dans lequel il est prévu un circuit (13) de validation d'informations de réponse provenant de la base de données (31), agencé pour corréler les données désignées avec la réponse et valider celle-ci.

10. Récepteur selon l'une des revendications 8 et 9, agencé pour recevoir des signaux de télévision numérique.
